# EUROPEAN PATENT APPLICATION

(11) **EP 4 793 548 A1**
(43) Date of publication of application: **19.08.2026**
(21) Application number: 26154057.9
(22) Date of filing: 26.01.2026
(51) Int. Cl.: F23R 3/14, F23R 3/28

(54) **NOZZLE FOR COMBUSTOR AND GAS TURBINE INCLUDING SAME**

(30) Priority: 17.02.2025 KR 20250020154
(71) Applicant: Doosan Enerbility Co., Ltd., Seongsan-gu Changwon-si, Gyeongsangnam-do 51711 (KR)
(72) Inventor: SHERSHNYOV, Borys, 51632 Changwon-si (KR)
(74) Representative: Ter Meer Steinmeister & Partner

(57) **Abstract**

A nozzle (1220) for a combustor (1200) and a gas turbine (1000) including the same are provided. The nozzle (1220) for the combustor (1200) includes a nozzle assembly (1400), which includes a cylindrical central nozzle module (1500) including a plurality of tubes (1530) arranged in parallel, a plurality of outer nozzle modules (1600) arranged around the central nozzle module (1500) and including a plurality of tubes (1630) arranged in parallel, a local cavity (1550) formed in a central portion of a front portion of the central nozzle module (1500), the local cavity (1550) being configured to allow gas to flow therein, and a local cavity (1650) formed in a central portion of a front portion of each of the plurality of outer nozzle modules (1600), the local cavity (1650) being configured to allow gas to flow therein.

## Description

### BACKGROUND

### Field

Apparatuses and methods consistent with exemplary embodiments relate to a nozzle for a combustor and a gas turbine including the same, and more particularly to a nozzle for a combustor including a central nozzle module and a plurality of outer nozzle modules in which local cavities are formed in central portions thereof, and a gas turbine including the same.

### Description of the Related Art

Gas turbines are power plants that mix and combust compressed air from a compressor and fuel, and use high-temperature gas produced by combustion to rotate a turbine. Gas turbines are used to drive generators, aircraft, ships, trains, or the like.

The gas turbine includes a compressor, a combustor, and a turbine. The compressor sucks outside air, compresses the air, and delivers the compressed air to the combustor. The air compressed by the compressor becomes high-pressure and high-temperature. The combustor mixes the compressed air supplied from the compressor with fuel and combusts a mixture to produce combustion gas which is discharged into the turbine. Turbine blades in the turbine are rotated by the combustion gas to generate power. The generated power is used in various fields, including power generation and machinery operation.

Fuel is injected through a nozzle installed within the combustor, and the nozzle may inject both gaseous fuel and liquid fuel. Recently, it is recommended to use hydrogen fuel or fuel containing hydrogen to suppress carbon dioxide emissions.

However, because hydrogen combusts rapidly, when using a gas turbine combustor to combust the fuel, the flame produced in the gas turbine combustor can be close to the structure, leading to overheating, which may affect reliability of the gas turbine combustor.

### SUMMARY

Aspects of one or more exemplary embodiments provide a nozzle for a combustor and a gas turbine including the same, the nozzle being capable of improving flame stabilization and enhancing the performance of the combustor by forming localized cavities in central portions of a central nozzle module and a plurality of outer nozzle modules.

Additional aspects will be set forth in part in the description which follows and, in part, will become apparent from the description, or may be learned by practice of the exemplary embodiments.

According to an aspect of an exemplary embodiment, there is provided a nozzle for a combustor, the nozzle including: a nozzle assembly, wherein the nozzle assembly may include: a cylindrical central nozzle module including a plurality of tubes arranged in parallel; a plurality of outer nozzle modules arranged around the central nozzle module and including a plurality of tubes arranged in parallel; a local cavity formed in a central portion of a front portion of the central nozzle module, the local cavity being configured to allow gas to flow therein; and a local cavity formed in a central portion of a front portion of each of the plurality of outer nozzle modules, the local cavity being configured to allow gas to flow therein.

The nozzle assembly may further include: a circumferential groove formed concavely between the central nozzle module and the plurality of outer nozzle modules; and radial grooves formed concavely between the plurality of outer nozzle modules.

The local cavity of the central nozzle module may include a cavity wall having a conical groove formed in a central portion of a front surface of the central nozzle module.

The local cavity of the central nozzle module may further include a center flow path connected to a rear surface of the cavity wall.

The local cavity of the central nozzle module may further include a cavity formed behind the cavity wall and a front wall of the central nozzle module, the cavity being fluidly communicated with a space between the plurality of tubes.

The cavity may be in communication with the space between the plurality of tubes from the center flow path through a plurality of communicating holes formed in a side end of a front portion of the center flow path.

The local cavity of each outer nozzle module may include a cavity wall having a conical groove formed in a central portion of a front surface thereof.

The local cavity of each outer nozzle module may further include a center flow path connected to a rear surface of the cavity wall.

The local cavity of each outer nozzle module may further include a cavity formed behind the cavity wall and a front wall of the outer nozzle module, the cavity being fluidly communicated with a space between the plurality of tubes.

The cavity may include an impingement wall formed behind the cavity wall and the front wall of each outer nozzle module at a predetermined interval, the impingement wall including a plurality of impingement holes formed therethrough.

The local cavity of each outer nozzle module may further include: a first fuel cavity formed outside a side wall of a front end portion of the center flow path; and a second fuel cavity formed around a side wall of the center flow path and partitioned by an inclined wall constituting a rear wall of the first fuel cavity.

A plurality of slots may be formed through a side wall of a front end portion of the center flow path, the plurality of slots allowing the center flow path and the first fuel cavity to communicate with each other.

According to an aspect of another exemplary embodiment, there is provided a gas turbine including: a compressor configured to compress air flowing from an outside; a combustor configured to mix fuel with the air compressed by the compressor and combust a mixture of the fuel and air to produce combustion gas; and a turbine including a plurality of turbine blades rotated by combustion gas produced by the combustor, wherein the combustor may include: a nozzle for a combustor including a nozzle assembly and a duct assembly coupled to a portion of the nozzle to combust the mixture of the air and fuel and transmit the combustion gas to the turbine, wherein the nozzle assembly may include: a cylindrical central nozzle module including a plurality of tubes arranged in parallel; a plurality of outer nozzle modules arranged around the central nozzle module and including a plurality of tubes arranged in parallel; a local cavity formed in a central portion of a front portion of the central nozzle module, the local cavity being configured to allow gas to flow therein; and a local cavity formed in a central portion of a front portion of each of the plurality of outer nozzle modules, the local cavity being configured to allow gas to flow therein.

The local cavity of the central nozzle module may include a cavity wall having a conical groove formed in a central portion of a front surface thereof.

The local cavity of the central nozzle module may further include a center flow path connected to a rear surface of the cavity wall.

According to the present disclosure, the nozzle for a combustor and the gas turbine including the same can enhance flame stabilization and improve combustor performance by forming local cavities in the central portions of the central nozzle module and the plurality of outer nozzle modules.

### BRIEF DESCRIPTION OF THE DRAWINGS

The above and other aspects will become more apparent from the following description of the exemplary embodiments with reference to the accompanying drawings, in which:
FIG. 1 is a partially cut-perspective view of a gas turbine according to an exemplary embodiment;
FIG. 2 is a sectional view showing a combustor of FIG. 1;
FIG. 3 is a front-perspective view showing a nozzle assembly of an exemplary embodiment;
FIG. 4 is a rear-perspective view showing the nozzle assembly of FIG. 3;
FIG. 5 is a perspective view showing a central nozzle module of FIG. 3;
FIGS. 6A and 6B are views showing a tube inlet of the central nozzle module;
FIG. 7 is a sectional view showing the tube inlet of FIGS. 6 A and 6B;
FIG. 8 is a cut-perspective view showing the central nozzle module cut near an outlet along a plane perpendicular to the center thereof;
FIG. 9 is a partially cut-perspective view showing tubes with pilot flow paths of FIG. 8;
FIG. 10 is a sectional view showing a flow of gas in a tube in which a swirler and a pilot flow path are formed;
FIG. 11 is a cut-perspective view showing a central nozzle module and an outer nozzle module cut by a plane passing through their centers;
FIG. 12 is a front-perspective view of FIG. 11;
FIG. 13 is an enlarged view showing a local cavity of the central nozzle module of FIG. 12;
FIG. 14 is a perspective view showing an outer nozzle module;
FIG. 15 is a rear-perspective view showing the outer nozzle module of FIG. 14;
FIG. 16 is a cut-perspective view showing the outer nozzle module of FIG. 14, which is cut by a plane passing through its center;
FIG. 17 is a cut-perspective view showing an outer nozzle module cut by a plane perpendicular to the center near an outlet;
FIG. 18 is a partially cut-perspective view showing tubes with pilot flow paths of FIG. 17;
FIG. 19 is a partially cut-perspective view showing an impingement wall and holes formed near tube outlets of an outer nozzle module;
FIG. 20 is a sectional view showing a flow of gas in a tube in which a swirler and a pilot flow path are formed;
FIG. 21 is a view showing the plane used to measure the gas flow velocity around a circumferential groove;
FIG. 22 is an image showing the gas velocity of gas flowing on the plane shown in FIG. 21;
FIG. 23 is a view showing the plane used to measure the gas flow velocity around a radial groove;.
FIG. 24 is an image showing the gas velocity of gas flowing on the plane shown in FIG. 23;
FIG. 25 is a view showing the plane used to measure the gas flow velocity around a local cavity in the central nozzle module;
FIG. 26 is an image showing the gas velocity of gas flowing on the plane shown in FIG. 25;
FIG. 27 is a view showing the plane used to measure the gas flow velocity around a local cavity in an outer nozzle module; and
FIG. 28 is an image showing the gas velocity of gas flowing on the plane shown in FIG. 27.

### DETAILED DESCRIPTION

Various modifications and various embodiments will be described in detail with reference to the accompanying drawings. However, it should be understood that various embodiments are not for limiting the scope of the disclosure to the specific embodiments, but they should be interpreted to include all of modifications, equivalents, additions, or substitutions of the embodiments included within the scope and spirit disclosed herein.

The terminology used herein is for the purpose of describing specific embodiments only and is not intended to limit the scope of the disclosure. As used herein, the singular forms "a", "an", and "the" are intended to include the plural forms as well, unless the context clearly indicates otherwise. It will be further understood that the terms "comprise", "include", "have" specify the presence of stated features, integers, steps, operations, elements, components, and/or combinations thereof, but do not preclude the presence or addition of one or more other features, integers, steps, operations, elements, components, and/or combinations thereof.

Hereinbelow, exemplary embodiments will be described in detail with reference to the accompanying drawings. It is noted that like reference numerals refer to like parts throughout the various drawings and exemplary embodiments. In certain embodiments, detailed descriptions of known functions and configurations which are deemed to make the gist of the present disclosure obscure will be omitted. For the same reason, some components in the accompanying drawings may be exaggerated, omitted, or simplified.

Hereinbelow, a nozzle for a combustor, a combustor, and a gas turbine including the same will be described with reference to the accompanying drawings.

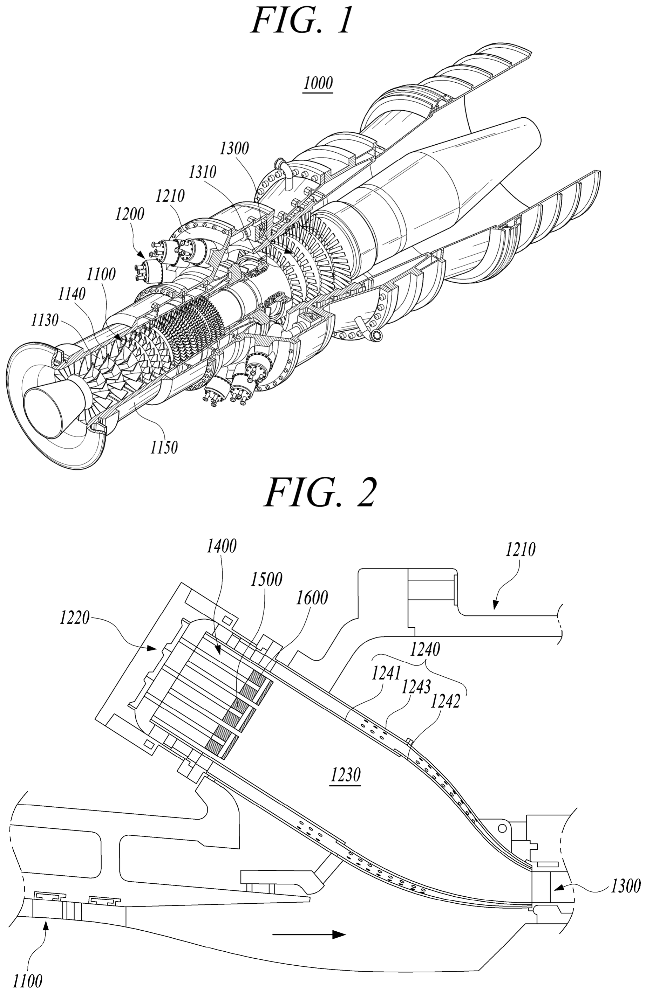

FIG. 1 is a partially cut-perspective view of a gas turbine according to an exemplary embodiment. FIG. 2 is a sectional view showing a combustor of FIG. 1.

An ideal thermodynamic cycle of a gas turbine 1000 may ideally comply with the Brayton cycle. The Brayton cycle includes four processes; isentropic compression (i.e., an adiabatic compression) process, isobaric heating process, isentropic expansion (i.e., an adiabatic expansion) process, and isobaric cooling process. In other words, in the Brayton cycle, thermal energy may be released by combustion of fuel in an isobaric environment after external air is sucked and compressed into high pressure air, hot combustion gas may be expanded to be converted into kinetic energy, and exhaust gas with residual energy may be discharged to the outside. As such, the Brayton cycle may consist of four thermodynamic processes of compression, heating, expansion, and exhaust.

The gas turbine 1000 implementing the Brayton cycle may include a compressor 1100, a combustor 1200, and a turbine 1300. Although the following description will refer to FIG. 1, the present disclosure may also be broadly applied to other turbine engine having the same configuration as the gas turbine 1000 shown in FIG. 1.

Referring to FIG. 1, the compressor 1100 of the gas turbine 1000 may suck and compress external air. The compressor 1100 may supply compressed air from compressor blades 1130 to the combustor 1200, and also supply cooling air to a high-temperature area in the gas turbine 1000. Here, because the sucked air is compressed in the compressor 1100 through the adiabatic compression process, the pressure and temperature of the air passing through the compressor 1100 increase.

The compressor 1100 is designed in the form of a centrifugal or axial compressor. The centrifugal compressor is used in small gas turbines, whereas a multi-stage axial compressor is applied to the large gas turbine 1000 shown in FIG. 1 to compress a large amount of air. In the multi-stage axial compressor 1100, the compressor blades 1130 rotate with the rotation of a rotor disc, compress introduced air and move the compressed air to compressor vanes 1140 disposed at a following stage. The air is compressed gradually to a high pressures while passing through the multistage compressor blades 1130.

The compressor vanes 1140 are mounted inside a housing 1150 in such a way that a plurality of compressor vanes 1140 form each stages. The compressor vanes 1140 guide the compressed air moved from the compressor blades 1130 disposed at a preceding stage toward the compressor blades 1130 disposed at a following stage. For example, at least some of the plurality of compressor vanes 1140 may be mounted to be rotatable within a preset range to adjust the air inflow rate.

The compressor 1100 may be driven using a portion of the power output from the turbine 1300. To this end, as shown in FIG. 1, a rotating shaft of the compressor 1100 and a rotating shaft of the turbine 1300 may be directly connected to each other. For the large-scale gas turbine 1000, nearly half of the power generated at the turbine 1300 may be consumed to drive the compressor 1100. Therefore, improving the efficiency of the compressor 1100 directly influences improving the entire efficiency of the gas turbine 1000.

The turbine 1300 includes a rotor disc 1310 and a plurality of turbine blades and a plurality of turbine vanes arranged radially on the rotor disc 1310. The rotor disc 1310 has a circular plate shape, and a plurality of grooves are formed in an outer circumferential portion thereof. The grooves are formed with curved surfaces so that the turbine blades are inserted into the grooves, and the turbine vanes are mounted in a turbine casing. The turbine blades are secured so as not to rotate and guide the flow direction of the combustion gas passing through the turbine blades. The turbine blades generate a rotating force while rotating by the combustion gas.

The combustor 1200 mixes the compressed air supplied from the outlet of the compressor 1100 with fuel and burns them at uniform pressure to produce high-energy combustion gas. FIG. 2 shows an example of the combustor 1200 used in the gas turbine 1000. The combustor 1200 may include a combustor casing 1210, a nozzle 1220, and a duct assembly 1240.

The combustor casing 1210 may envelop the nozzle 1220 and has a circular-cylindrical shape. The nozzle 1220 is arranged at a lower stream of the compressor 1100, and arranged along the ringshaped combustor casing 1210. The nozzle 1220 includes at least one nozzle module 1400, and the nozzle module 1400 allows fuel and air to be mixed and sprayed with a proper mixing ratio to provide a status suitable for combustion.

The gas turbine 1000 may use gas fuel containing hydrogen. The fuel may be either hydrogen fuel alone or fuel containing hydrogen and natural gas.

Referring to FIG. 2, the duct assembly 1240 connects the nozzle 1220 and the turbine 1300 so that high temperature combustion gas flows to heat the duct assembly 1240, thereby properly cooling the heated duct assembly.

The duct assembly 1240 may include a liner 1241, a transition piece 1242, and a moving sleeve 1243. The duct assembly 1240 has a double-wall structure in which the moving sleeve 1243 surrounds the liner 1241 and the transition piece 1242. The compressed air penetrates into a ringshaped space in the moving sleeve 1243 to cool the liner 1241 and the transition piece 1242.

The liner 1241 is a tubular member connected to the nozzle 1220 of the combustor 1200, and a combustion chamber 1230 is an internal space of the liner 1241. The liner 1241 has a longitudinal first end coupled to the nozzle 1220 and a longitudinal second end coupled to the transition piece 1242.

The transition piece 1242 is connected to an entrance of the turbine 1300 to guide high-temperature combustion gas toward the turbine 1300. The transition piece 1242 has a longitudinal first end coupled to the liner 1241 and a longitudinal second end coupled to the turbine 1300. The moving sleeve 1243 serves to protect the liner 1241 and the transition piece 1242 to prevent high-temperature heat from being emitted outward directly.

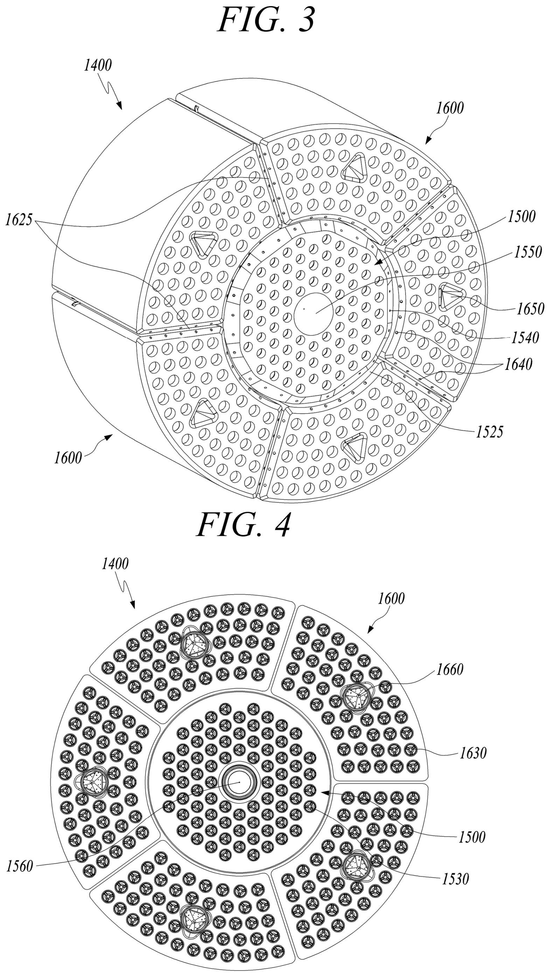

FIG. 3 is a front-perspective view showing a nozzle assembly according to an exemplary embodiment. FIG. 4 is a rear-perspective view showing the nozzle assembly of FIG. 3.

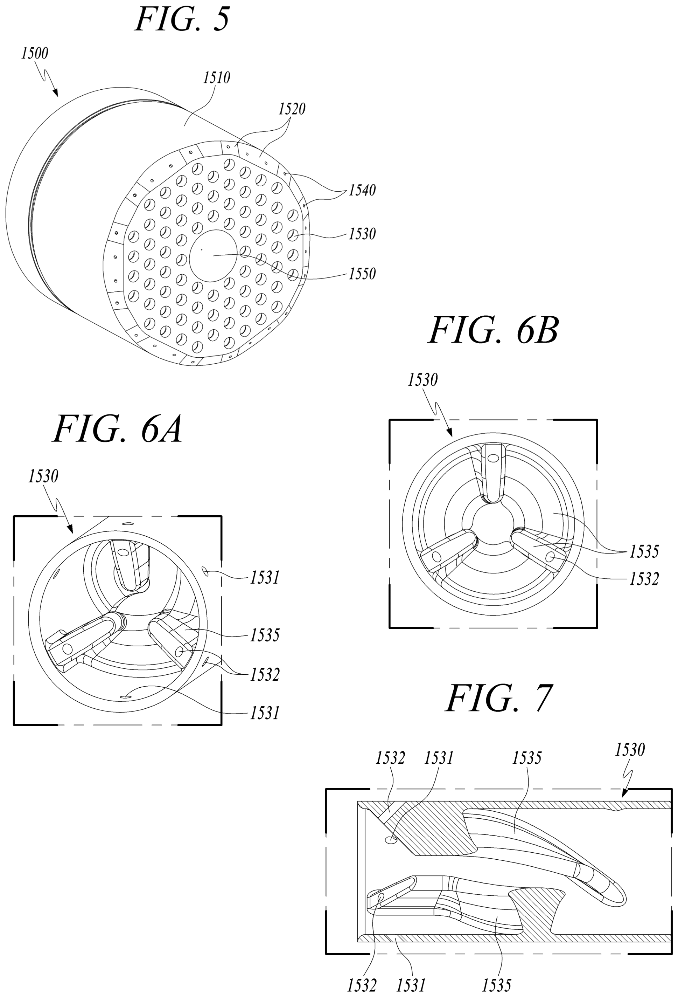

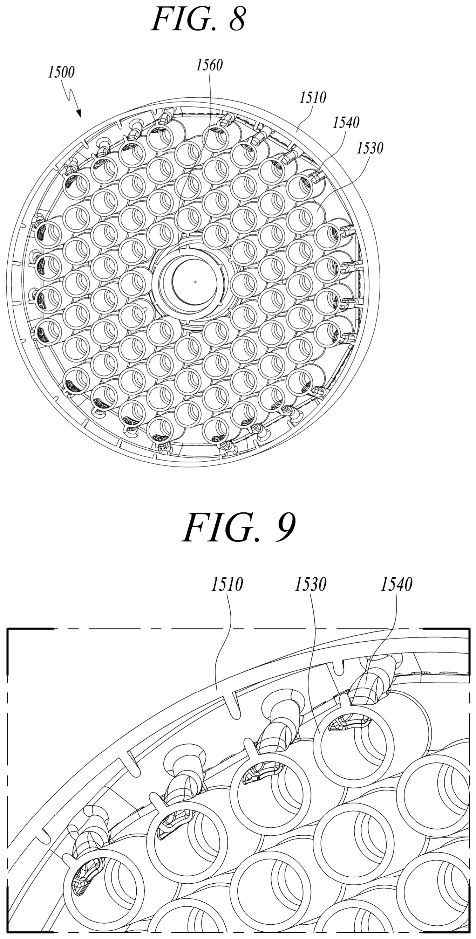

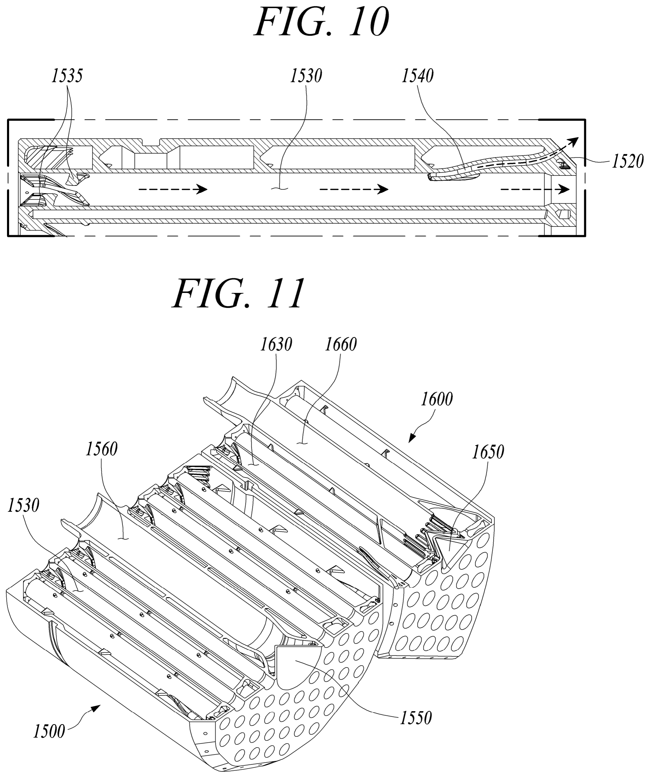

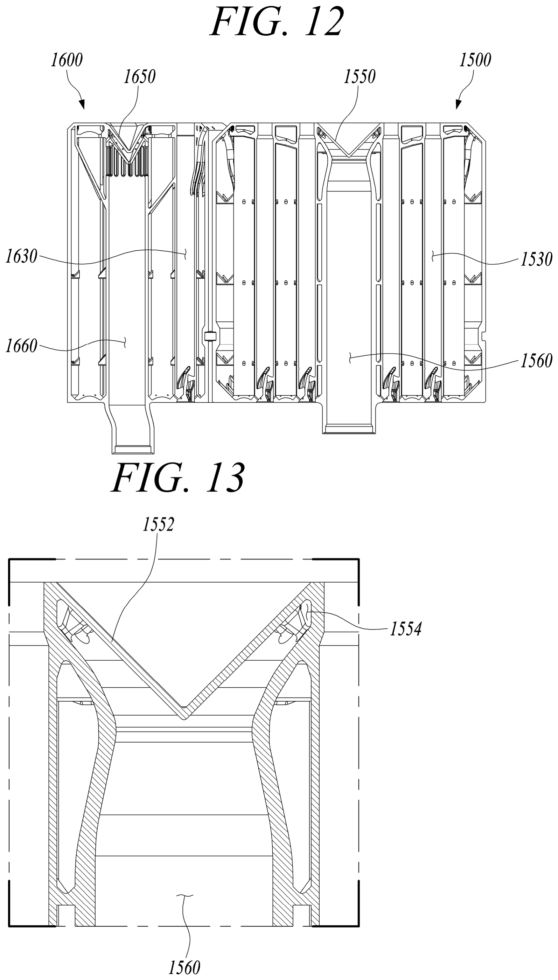

FIG. 5 is a perspective view showing a central nozzle module of FIG. 3. FIGS. 6A and 6B are views showing a tube inlet of the central nozzle module. FIG. 7 is a sectional view showing the tube inlet of FIGS. 6A and 6B. FIG. 8 is a cut-perspective view showing the central nozzle module cut near an outlet by a plane perpendicular to the center thereof. FIG. 9 is a partially cut-perspective view showing tubes with pilot flow paths of FIG. 8. FIG. 10 is a sectional view showing a flow of gas in a tube in which a swirler and a pilot flow path are formed. FIG. 11 is a cut-perspective view showing a central nozzle module and an outer nozzle module that are cut by a plane passing through the center thereof. FIG. 12 is a perspective view showing a front surface of FIG. 11. FIG. 13 is an enlarged view showing a local cavity of the central nozzle module of FIG. 12.

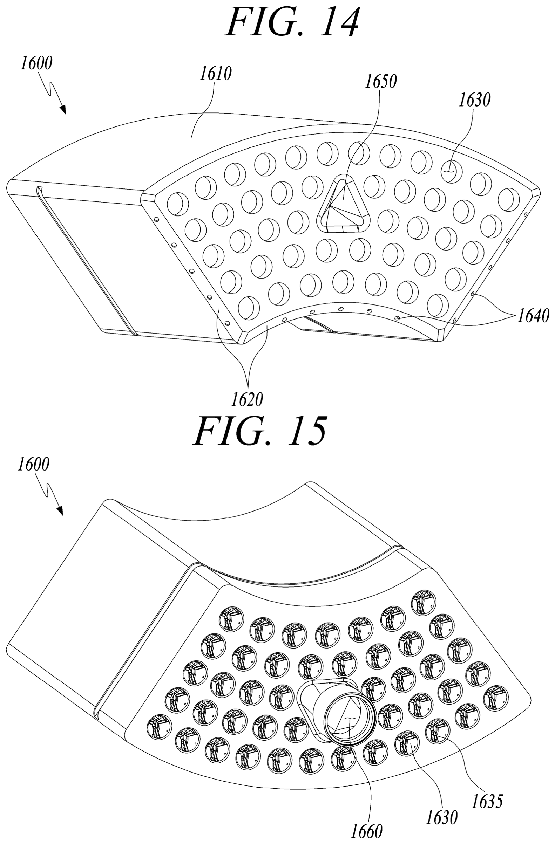

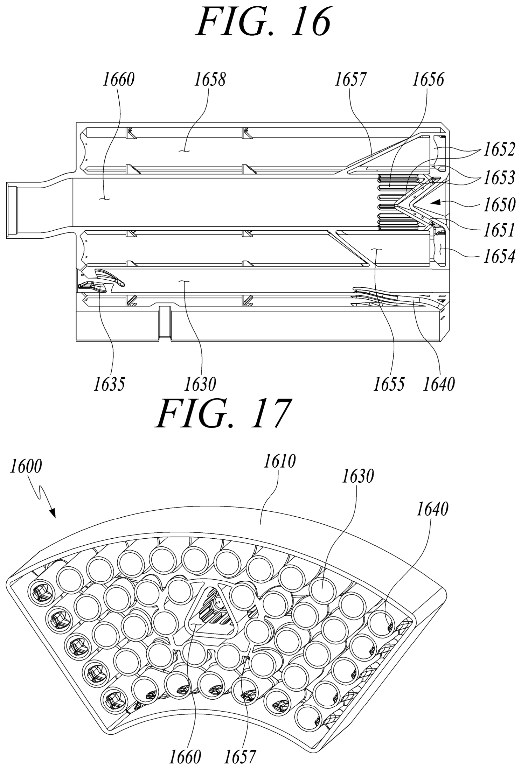

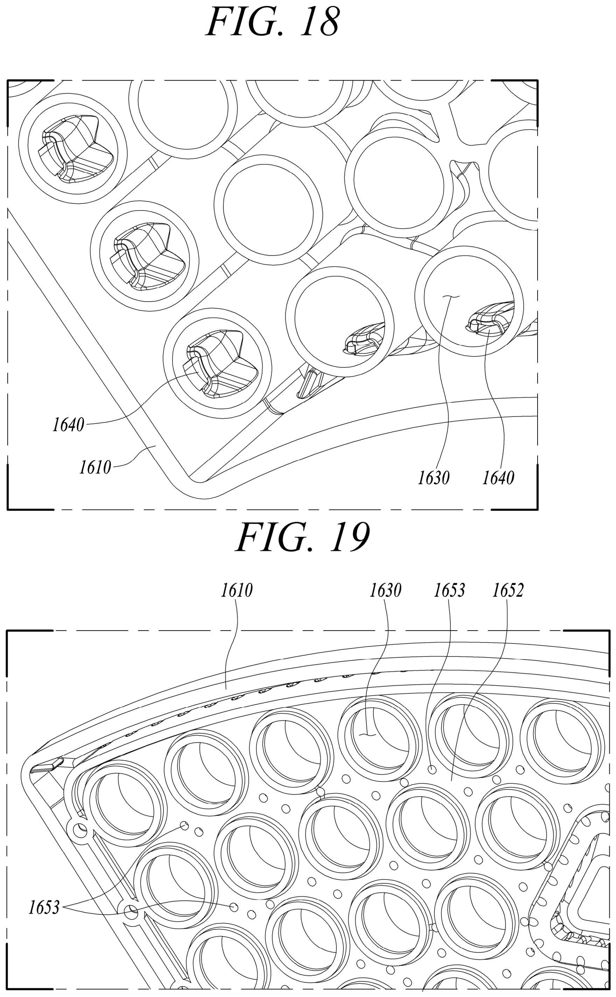

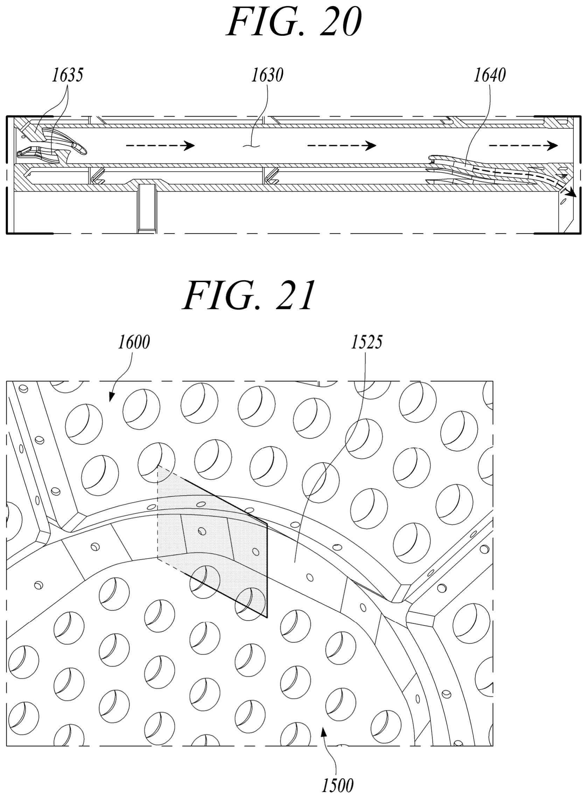

FIG. 14 is a perspective view showing an outer nozzle module. FIG. 15 is a rear-perspective view showing the outer nozzle module of FIG. 14. FIG. 16 is a cut-perspective view showing the outer nozzle module of FIG. 14 cut by a plane passing through the center thereof. FIG. 17 is a cut-perspective view showing an outer nozzle module cut near an outlet by a plane perpendicular to the center. FIG. 18 is a partially cut-perspective view showing tubes with pilot flow paths of FIG. 17. FIG. 19 is a partially cut-perspective view showing an impingement wall and holes formed near tube outlets of an outer nozzle module. FIG. 20 is a sectional view showing a flow of gas in a tube in which a swirler and a pilot flow path are formed.

Referring to FIGS. 3 to 20, the nozzle 1220 for a combustor according to the first exemplary embodiment includes a nozzle assembly 1400 including a plurality of nozzle modules.

The nozzle assembly 1400 may include a central nozzle module 1500 formed in a cylindrical shape and including a plurality of tubes 1530 arranged in parallel, and a plurality of outer nozzle modules 1600 arranged around the central nozzle module, each including a plurality of tubes 1630 arranged in parallel.

Referring to FIGS. 3 to 5, the central nozzle module 1500 includes a shell body portion 1510 provided at an outer portion of the central nozzle module and having a cylindrical shell shape, and the plurality of tubes 1530 may be arranged parallel to each other and spaced apart in the shell body portion 1510.

The central nozzle module 1500 may include chamfered portions 1520 on a front edge portion and a rear edge portion, and each of the chamfered portions 1520 has a plurality of inclined flat surfaces. The plurality of inclined flat surfaces of the chamfered portion 1520 may include six inclined flat surfaces with a relatively wide circumferential width and six inclined flat surfaces with a relatively narrow circumferential width.

Referring to FIGS. 3, 4, 14, and 15, each of the outer nozzle modules 1600 may have a truncated fan-shaped cross-section. The plurality of tubes 1630 may be arranged parallel to each other and spaced apart in the outer nozzle modules 1600.

Each of the outer nozzle modules 1600 may include a shell body portion 1610 provided at an outer portion of the outer nozzle module and formed in a truncated-fan-shaped prism, and a plurality of chamfered portions 1620 formed on a front edge portion of the shell body portion 1610.

The plurality of chamfered portions 1620 are formed with inclined flat surfaces on linear edge portions of circumferentially opposing portions of the truncated-fan-shaped front edge portion, and with inclined curved surfaces on arc-shaped edge portions of radially outer and inner portions.

The nozzle assembly 1400 may include a circumferential groove 1525 formed concavely between the central nozzle module 1500 and the plurality of outer nozzle modules 1600, and a plurality of radial grooves 1625 formed concavely between the plurality of outer nozzle modules 1600.

The circumferential groove 1525 may be formed from the chamfered portion 1520 of the central nozzle module 1500 and the inclined curved surfaces of the plurality of chamfered portions 1620 at the inner portions of the plurality of outer nozzle modules 1600.

The chamfered portion 1520 of the central nozzle module 1500 is formed from a plurality of inclined flat surfaces on the front edge portion. The inner chamfered portions 1620 of the plurality of outer nozzle modules 1600 may be formed from inclined arc-curved surfaces. Therefore, the circumferential groove 1525 may be formed from the circumferential chamfered portion 1520 of the central nozzle module 1500 and the plurality of chamfered portions 1620 formed as inclined arc-curved surfaces on the radially inner portions of the plurality of outer nozzle modules 1600 and connected to each other.

The radial grooves 1625 may be formed from the plurality of chamfered portions 1620 formed on the circumferentially opposing edge portions of the plurality of outer nozzle modules 1600.

The pair of chamfered portions 1620 formed on the circumferentially opposing edge portions of each outer nozzle module 1600 may be arranged in a radial direction to form inclined flat surfaces. Therefore, each chamfered portion 1620 of two outer nozzle modules 1600 arranged to be in contact with each other in the circumferential direction may form respective radial grooves 1625 between the two outer nozzle modules 1600.

Referring to FIGS. 8 and 17, the nozzle assembly 1400 may include a plurality of pilot flow paths 1540and 1640, which are connected to the circumferential groove and the radial grooves among the plurality of tubes 1530and 1630 adjacent to the circumferential groove and the radial grooves.

The plurality of pilot flow paths 1540 of the central nozzle module 1500 may be formed to connect to the front chamfered portion 1520 of outer tubes 1530 arranged close to the chamfered portion 1520 among the plurality of tubes 1530. The pilot flow path 1540 may be arranged at a side wall of each tube 1530 towards the outer circumferential surface of the central nozzle module 1500.

Referring to FIGS. 9 and 18, the plurality of pilot flow paths 1540 of the central nozzle module 1500 may be connected to the chamfered portion 1520 from the inner surfaces of the tubes 1530 arranged adjacent to the circumferential groove 1525.

The pilot flow paths 1540 may protrude from the inner circumferential surfaces of the tubes 1530 and have flat inlets and circular outlets. The pilot flow paths 1540 may be formed such that the flat inlets protrude from the inner circumferential surfaces of the tubes 1530 and are integrally formed to pass through the side walls of the tubes 1530 and are connected to the circular outlets. As shown in FIG. 10, a line passing through the center of the pilot flow paths 1540 may be smoothly curved, not in a straight line.

The plurality of pilot flow paths 1640 of each outer nozzle module 1600 may be formed to connect to the front chamfered portion 1620 of outer tubes 1630, which are arranged close to the chamfered portion 1620 among the plurality of tubes 1630. The pilot flow path 1640 may be arranged at a side wall of each tube 1630 toward the outer circumferential surface of each outer nozzle module 1600.

The pilot flow paths 1640 of the outer nozzle modules 1600 may be connected to the chamfered portions 1620 from the inner surfaces of the tubes 1630 adjacent to the circumferential groove 1525 and the radial grooves 1625. The chamfered portions 1620 to which the pilot flow paths 1640 are connected may include a pair of inclined flat surfaces formed on opposite portions of each outer nozzle module 1600 and an inclined curved surface formed on a radially inner portion of each outer nozzle module 1600.

The pilot flow paths 1640 may protrude from the inner circumferential surfaces of the tubes 1630 and have flat inlets and circular outlets. The pilot flow paths 1640 may be formed such that the flat inlets protrude from the inner circumferential surfaces of the tubes 1630and are integrally formed to pass through the side walls of the tubes 1630 and are connected to the circular outlets. As shown in FIG. 20, a line passing through the center of the pilot flow paths 1640 may be smoothly curved, not in a straight line.

Referring to FIGS. 4, 6A, 6B, 7, 10, and 20, the plurality of tubes 1530and 1630 of the central nozzle module 1500 and the plurality of outer nozzle modules 1600 may include a plurality of swirlers 1535and 1635 formed spirally in the inlets of the tubes.

As shown in FIGS. 6A, 6B, 7, and 10, the swirlers 1535 may be formed integrally with the inner circumferential surface of the inlet of each tube 1530 of the central nozzle module 1500. The plurality of swirlers 1535 may have a spiral shape, and three swirlers may be arranged at angles of 120 degrees from each other.

Each tube 1530 may include a plurality of first fuel ports 1531 formed through the side wall of the tube between the plurality of swirlers 1535, and a plurality of second fuel ports 1532 formed through the swirlers 1535 on the outer circumferential surface of the side wall.

The plurality of first fuel ports 1531 may be formed through the side wall of each tube 1530 and inclined towards the inlet.

The plurality of second fuel ports 1532 may be formed through the side wall of each tube 1530 and the swirlers 1535 and inclined towards the inlet.

Fuel may flow through the plurality of first fuel ports 1531 and the plurality of second fuel ports 1532 from the outer circumferential portion of the tubes 1530 into the tubes 1530.

Referring to FIGS. 12 and 20, the swirlers 1635 may be formed integrally with the inner circumferential surface of the inlet of each tube 1630 of each outer nozzle module 1600. The plurality of swirlers 1635 may have a spiral shape, and three swirlers may be arranged at angles of 120 degrees from each other.

The swirlers 1635 of the outer nozzle modules 1600 may include a plurality of first fuel ports and a plurality of second fuel ports, as in the swirlers 1535 of the central nozzle module 1500.

Air and fuel flowing into the tubes 1530 and 1630 are rotated by the swirlers 1535and 1635 formed in portions of the inlet of each tube, allowing them to mix efficiently.

Referring back to FIG. 3, the nozzle assembly 1400 may include a local cavity 1550 formed in the front center of the central nozzle module 1500 to allow gas to flow, and a plurality of local cavities 1650 formed in the front center interior of the plurality of outer nozzle modules 1600 to allow gas to flow.

Referring to FIGS. 5, 12, and 13, the local cavity 1550 of the central nozzle module 1500 may include a cavity wall 1552 formed in a shape of a conical groove in a central portion of a front surface.

The cavity wall 1552 may be formed as a concave conical groove in the central portion of a front wall at the outlet of the central nozzle module 1500.

The local cavity 1550 of the central nozzle module 1500 may include a center flow path 1560 connected to a rear surface of the cavity wall 1552.

The center flow path 1560 may be formed as a circular tube having a larger diameter than that of the tubes 1530 arranged around it. The center flow path 1560 does not have a swirler at a rear inlet thereof. The center flow path 1560 includes a rear inlet through which fuel enters and a front outlet that is blocked by the cavity wall 1552 and a front wall of the shell body portion 1510, such that the incoming fuel flows only in the inner space and is not discharged through the front end.

Referring to FIGS. 11 to 13, the local cavity 1550 of the central nozzle module 1500 may include a cavity 1554 formed behind the cavity wall 1552 and the front wall of the central nozzle module 1500 and connected to a space between the plurality of tubes 1530.

The cavity 1554 may be defined as a space partitioned around the cavity wall 1552 within the front end of the center flow path 1560. The cavity 1554 may also be formed in a space between the plurality of tubes 1530 within a front end of the shell body portion 1510.

The cavity 1554 may be connected to a space from the center flow path 1560 to the plurality of tubes 1530 through a plurality of communication holes formed on a front end of the center flow path 1560.

The plurality of communication holes are formed through a side wall partitioning the center flow path 1560 and the cavity 1554, allowing fuel flowing into the center flow path 1560 to flow through the communication holes to the space between the plurality of tubes 1530 as well as the cavity 1554 around the center flow path 1560.

Referring to FIGS. 14 to 17, the local cavities 1650 of the outer nozzle modules 1600 may include a cavity wall 1651 formed in a shape of a triangular pyramid-shaped groove in a front central portion.

The cavity wall 1651 may be formed in the shape of a triangular pyramid-shaped groove in a central portion of a front wall at the outlet of each outer nozzle module 1600. In this case, a triangle in which the cavity wall 1651 meets a front end surface of the shell body portion 1610 may be arranged such that the base of the triangle is arranged in a radially inward portion, and an apex of the triangle is arranged in a radially outward portion.

The local cavity 1650 of each of the outer nozzle modules 1600 may include a center flow path 1660 connected to a rear surface of the cavity wall 1651.

The center flow path 1660 may be formed as a circular tube having a larger diameter than that of the tubes 1630 arranged around it. The center flow path 1660 does not have a swirler at a rear inlet thereof. The center flow path 1660 includes a rear inlet through which fuel enters and a front outlet that is blocked by the cavity wall 1651 and a front wall of the shell body portion 1610, such that the incoming fuel flows only in the inner space and is not discharged through the front end.

The local cavity 1650 of each of the outer nozzle modules 1600 may include a cavity 1654 formed behind the cavity wall 1651 and the front wall of each of the outer nozzle modules 1600 and connected to a space between the plurality of tubes 1630.

The cavity 1654 may be defined as a space partitioned around the cavity wall 1651 within the front end of the center flow path 1660. The cavity 1654 may also be formed in a space between the plurality of tubes 1630 within a front end of the shell body portion 1610.

The cavity 1654 may include an impingement wall 1652 formed at a predetermined distance behind the cavity wall 1651 and the front wall of each outer nozzle module 1600 at a predetermined interval, and the impingement wall 1652 has a plurality of impingement holes 1653 formed therein.

The impingement wall 1652 may be formed behind the cavity wall 1651 and the front wall of the shell body portion 1610, and may be spaced apart from them at a predetermined distance. The plurality of impingement holes 1653 may be formed through the impingement wall 1652 and may be arranged to face the cavity wall 1651 and the front wall of the shell body portion 1610. Fuel flowing into the center flow path 1660 may flow into the cavity 1654 through the plurality of impingement holes 1653 to impinge and cool the wall around the cavity 1654.

As shown in FIG. 16, the local cavities 1650 of the outer nozzle modules 1600 may include a first fuel cavity 1655 formed outside the side wall of a front end portion of the center flow path 1660, and a second fuel cavity 1658 formed around the side wall of the center flow path 1660 and partitioned by an inclined wall 1657 that forms a rear side wall of the first fuel cavity 1655.

The first fuel cavity 1655 may be formed in a space surrounding the center flow path 1660 outside the front side wall of the center flow path 1660, and the space behind the impingement wall 1652.

The second fuel cavity 1658 may be a space formed around the side wall of the center flow path 1660 and may be partitioned by the inclined wall 1657 which acts as the rear wall of the first fuel cavity 1655.

A plurality of slots 1656 may be formed through the side wall of the front end portion of the center flow path 1660 so that the center flow path 1660 and the first fuel cavity 1655 may communicate with each other.

The plurality of slots 1656 may be formed in an elongated shape through the side wall of the center flow path 1660 longitudinally close to the rear surface of the impingement wall 1652.

A portion of the fuel flowing into the center flow path 1660 may enter the first fuel cavity 1655 through the plurality of slots 1656. Fuel entering the first fuel cavity 1655 may perform impingement cooling by flowing through the plurality of impingement holes 1653 formed on the front impingement wall 1652 into the cavity 1654. A plurality of communicating holes are also formed in an outer wall of the cavity 1654, so that the fuel entering the cavity 1654 may flow into the second fuel cavity 1658 through the plurality of communicating holes.

As described above, the fuel flowing into the center flow path 1660 flows into the cavity 1654 to perform impingement cooling, and then circulates to the second fuel cavity 1658 to cool a nozzle tip portion of each of the outer nozzle modules 1600. In addition, the fuel flowing into the second fuel cavity 1658 may flow into the tubes 1630 through the plurality of fuel ports formed on the side wall of the inlet of each of the tubes 1630.

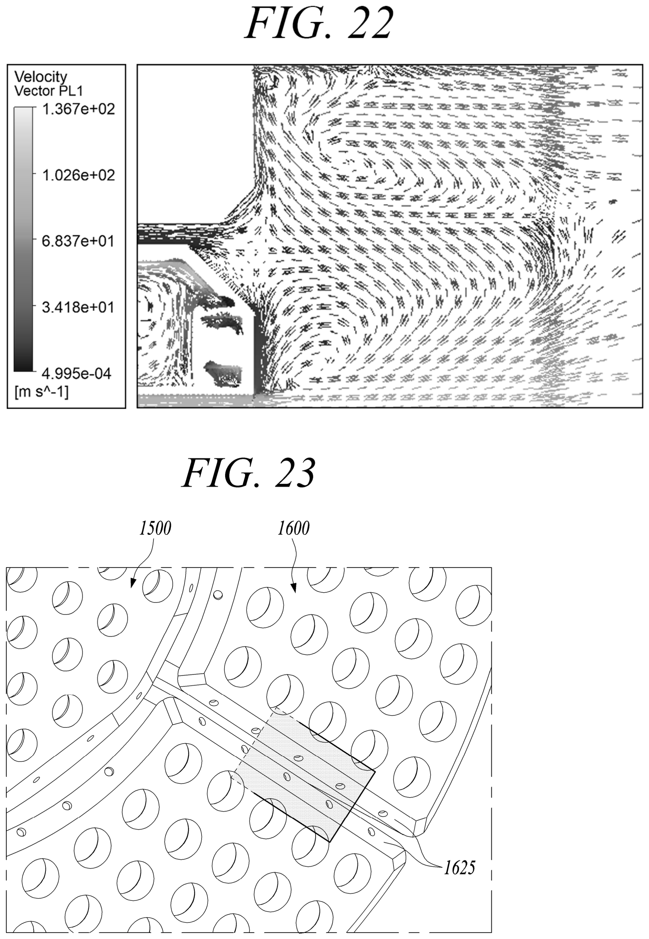

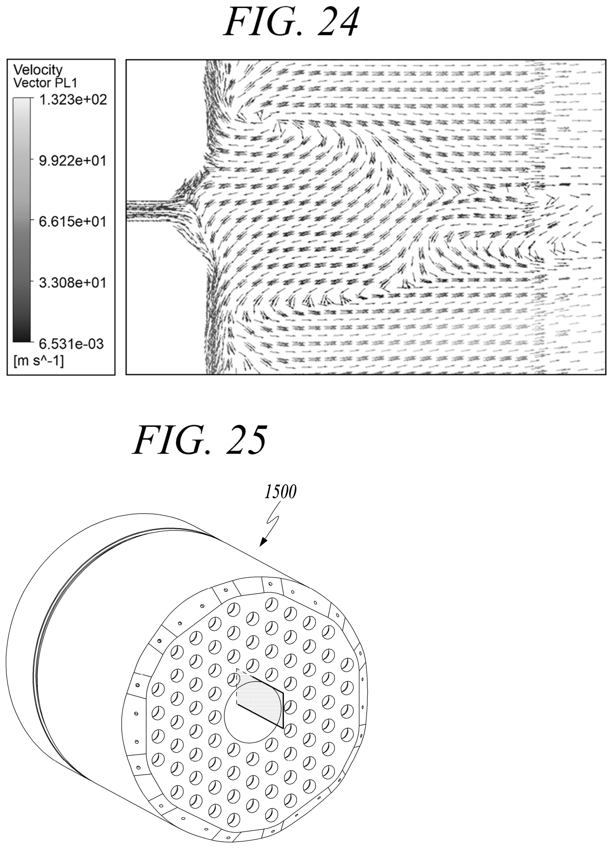

FIG. 21 is a view showing the plane used to measure the gas flow velocity around a circumferential groove. FIG. 22 is an image showing the flow velocity of gas flowing on the plane shown in FIG. 21. FIG. 23 is a view showing the plane used to measure the gas flow velocity around a radial groove. FIG. 24 is an image showing the flow velocity of gas flowing on the plane shown in FIG. 23.

Referring to FIGS. 21 and 22, the nozzle assembly 1400 may allow a portion of air-fuel mixture gas from the plurality of tubes 1530and 1630 to be discharged along the circumferential groove 1525 through the plurality of pilot flow paths 1540and 1640.

Accordingly, a recirculation zone is formed around the circumferential groove at the outlet of the nozzle assembly 1400 to increase flame stability, thereby improving the operating characteristics and combustion range control capabilities of the combustor.

Referring to FIGS. 23 and 24, the nozzle assembly 1400 may allow a portion of the air-fuel mixture gas from the plurality of tubes 1630 to be discharged along the radial grooves 1625 through a plurality of pilot flow paths 1640.

Accordingly, a recirculation zone is formed around the radial groove at the outlet of the nozzle assembly 1400 to improve flame stability, thereby improving the operating characteristics and combustion range control capabilities of the combustor.

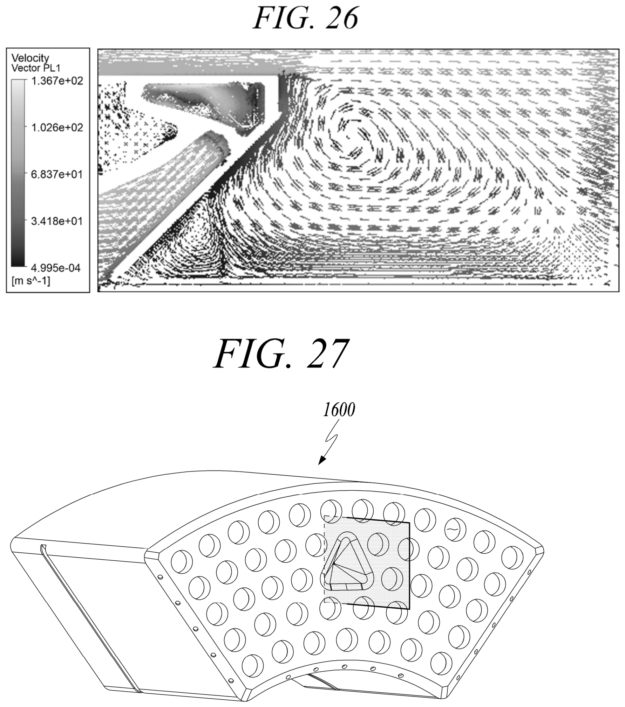

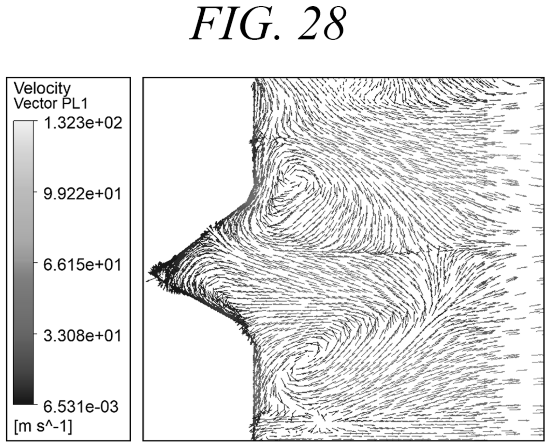

FIG. 25 is a view showing the plane used to measure the gas flow velocity around a local cavity of the central nozzle module. FIG. 26 is an image showing the flow velocity of gas flowing on the plane shown in FIG. 25. FIG. 27 is a view showing the plane used to measure the gas flow velocity around a local cavity of an outer nozzle module. FIG. 28 is an image showing the flow velocity of gas flowing on the plane shown in FIG. 27.

Referring to FIGS. 25 and 26, the nozzle assembly 1400 includes the local cavity 1550 in the central portion of the central nozzle module 1500, thereby forming a recirculation zone around it, which improves flame stability and, consequently, enhances the dynamic characteristics and operating range performance of the combustor.

Referring to FIGS. 27 and 28, the nozzle assembly 1400 includes the local cavities 1650 around the central portions of the outer nozzle modules 1600, thereby forming a recirculation zone around it, which improves flame stability and, consequently, enhances the dynamic characteristics and operating range performance of the combustor.

According to the nozzle for a combustor, the combustor, and the gas turbine of the present disclosure, the pilot flow paths are formed at the central nozzle module and the plurality of outer nozzle modules from the plurality of tubes to the circumferential groove or the radial grooves, thereby improving flame stabilization and interaction between the nozzles.

While one or more exemplary embodiments have been described with reference to the accompanying drawings, it will be apparent to those skilled in the art that various modifications and variations can be made through additions, substitutions, changes, or deletions of components without departing from the scope and spirit of the disclosure as disclosed in the accompanying claims, and these modifications and changes fall within the scope and spirit of the disclosure as defined in the appended claims.

## Claims

1. A nozzle for a combustor, comprising:
a nozzle assembly,
wherein the nozzle assembly comprises:
a cylindrical central nozzle module comprising a plurality of tubes arranged in parallel;
a plurality of outer nozzle modules arranged around the central nozzle module and comprising a plurality of tubes arranged in parallel;
a local cavity formed in a central portion of a front portion of the central nozzle module, the local cavity being configured to allow gas to flow therein; and
a local cavity formed in a central portion of a front portion of each of the plurality of outer nozzle modules, the local cavity being configured to allow gas to flow therein.

2. The nozzle of claim 1, wherein the nozzle assembly further comprises:
a circumferential groove formed concavely between the central nozzle module and the plurality of outer nozzle modules; and
radial grooves formed concavely between the plurality of outer nozzle modules.

3. The nozzle of claim 2, wherein the local cavity of the central nozzle module comprises a cavity wall having a conical groove formed in a central portion of a front surface of the central nozzle module.

4. The nozzle of claim 3, wherein the local cavity of the central nozzle module further comprises a center flow path connected to a rear surface of the cavity wall.

5. The nozzle of claim 4, wherein the local cavity of the central nozzle module further comprises a cavity formed behind the cavity wall and a front wall of the central nozzle module, the cavity being fluidly communicated with a space between the plurality of tubes.

6. The nozzle of claim 5, wherein the cavity is in communication with the space between the plurality of tubes from the center flow path through a plurality of communicating holes formed in a side end of a front portion of the center flow path.

7. The nozzle of claim 2, wherein the local cavity of each outer nozzle module comprises a cavity wall having a conical groove formed in a central portion of a front surface thereof.

8. The nozzle of claim 7, wherein the local cavity of each outer nozzle module further comprises a center flow path connected to a rear surface of the cavity wall.

9. The nozzle of claim 8, wherein the local cavity of each outer nozzle module further comprises a cavity formed behind the cavity wall and a front wall of the outer nozzle module, the cavity being fluidly communicated with a space between the plurality of tubes.

10. The nozzle of claim 9, wherein the cavity comprises an impingement wall formed behind the cavity wall and the front wall of each outer nozzle module at a predetermined interval, the impingement wall having a plurality of impingement holes formed therethrough.

11. The nozzle of claim 10, wherein the local cavity of each outer nozzle module further comprises:
a first fuel cavity formed outside a side wall of a front end portion of the center flow path; and
a second fuel cavity formed around a side wall of the center flow path and partitioned by an inclined wall constituting a rear wall of the first fuel cavity.

12. The nozzle of claim 11, wherein a plurality of slots is formed through a side wall of a front end portion of the center flow path, the plurality of slots allowing the center flow path and the first fuel cavity to communicate with each other.

13. A gas turbine comprising:
a compressor configured to compress air flowing from an outside;
a combustor configured to mix fuel with the air compressed by the compressor and combust a mixture of the fuel and air to produce combustion gas; and
a turbine comprising a plurality of turbine blades rotated by combustion gas produced by the combustor,
wherein the combustor comprises a nozzle for a combustor comprising a nozzle assembly and a duct assembly coupled to a portion of the nozzle to combust the mixture of the air and fuel and transmit the combustion gas to the turbine,
wherein the nozzle assembly comprises:
a cylindrical central nozzle module comprising a plurality of tubes arranged in parallel;
a plurality of outer nozzle modules arranged around the central nozzle module and comprising a plurality of tubes arranged in parallel;
a local cavity formed in a central portion of a front portion of the central nozzle module, the local cavity being configured to allow gas to flow therein; and
a local cavity formed in a central portion of a front portion of each of the plurality of outer nozzle modules, the local cavity being configured to allow gas to flow therein.

14. The gas turbine of claim 13, wherein the local cavity of the central nozzle module comprises a cavity wall having a conical groove formed in a central portion of a front surface thereof.

15. The gas turbine of claim 14, wherein the local cavity of the central nozzle module further comprises a center flow path connected to a rear surface of the cavity wall.
